# EUROPEAN PATENT SPECIFICATION

(11) **EP 3 301 597 B1**
(45) Date of publication and mention of the grant of the patent: **23.08.2023**
(21) Application number: 16192079.8
(22) Date of filing: 03.10.2016
(51) Int. Cl.: B29C 33/38, G06F 30/17, G06F 30/23, B29C 33/00, B29C 33/44, G06F 113/10, G06F 113/22

(54) **METHOD FOR COMPUTATIONALLY DESIGNING A RE-USABLE FLEXIBLE MOLD**
VERFAHREN ZUR BERECHNUNG DER KONSTRUKTION EINER WIEDERVERWENDBAREN FLEXIBLEN FORM
PROCÉDÉ DE CONCEPTION ASSISTÉE PAR ORDINATEUR D'UN MOULE SOUPLE RÉUTILISABLE

(43) Date of publication of application: 04.04.2018
(73) Proprietor: Institute of Science and Technology Austria, 3400 Klosterneuburg (AT)
(72) Inventor: CIGNONI, Paolo, 57025 Piombino (IT); PIETRONI, Nico, 56121 Pisa (IT); BICKEL, Bernd, 1090 Wien (AT); MALOMO, Luigi, 88100 Catanzaro (IT)
(74) Representative: Patentanwaltskanzlei Matschnig & Forsthuber OG

(56) References cited:
- ES-A1- 2 325 524
- US-A1- 2012 232 857
- ALEXANDER BAKHAREV ET AL: "Simulation of ejection of moldings using combination of mold filling and thermo-mechanical analyses", AIP CONFERENCE PROCEEDINGS, 1 May 2013 (2013-05-01), pages 555-560, XP055334195, NEW YORK, US ISSN: 0094-243X, DOI: 10.1063/1.4806875
- Cimatron Group: "CAD/CAM solution for mold making", , 1 June 2011 (2011-06-01), pages 1-20, XP055334643, Retrieved from the Internet: URL:www.cimatron.com/SIP_STORAGE/FILES/9/3 389.pdf [retrieved on 2017-01-12]

## Description

### Field of the invention and description of prior art

The invention relates to a method for computationally designing a re-usable flexible mold having a verified cut layout for reproduction of objects having rich surface details or complex shape structure.

So far, labor-intensive manual processes like silicone mold casting were applied in order to reproduce objects having rich surface details. Silicone mold casting is typically performed by a skilled artist, wherein a silicone mold is created based on the object to be reproduced. The cuts are manually applied on a silicone mold in order to release the mold from the object to be casted within the mold. The selection of said cuts is performed by the artist, who relies on its skill and intuition when choosing specific cuts. The paper "Simulation of ejection of moldings using combination of mold filling and thermo-mechanical analyses" by Alexander Bakharev et al relates to the field of simulation of ejection of moldings. Document ES 2235524 A1 discloses a modular mold for rapid prototyping, which is subdivided into at least two parts which can be connected with each other. Document US 2012/232857 (FISKER RUNE [DK] ET AL) discloses additively manufacturing a flexible mold with at least one "separation plane and/ or separation spline" (claim 37), i.e., multiple parts separated by cuts, and of "automatically arranging said at least one separation plane and/or separation spline" (claim 43). This automatic modification is to ensure a design without undercuts (claim 44) which might get in the way of mold part separation ([0110]).

### Summary of the invention

It is an object of the invention to provide a method for computational designing a re-usable flexible mold.

This aim is achieved by the method according to claim 1.

If the strain for each patch of a given cut layout is below a given threshold a cut layout is determined as being feasible Xf.

By virtue of this approach it is possible to computationally design a re-usable flexible mold having a verified cut layout Xf, which allows to re-use said mold to reproduce, by casting, multiple copies of the input object..

According to the invention, based on the result of step c) the closed surface mesh Mi is manipulated in a following step d) resulting in a manipulated mesh Mm, wherein the extraction process for the manipulated mesh Mm is calculated in another step b) and verified in another step c), wherein in case the manipulated mesh Mm is determined as being a feasible mesh Mf the feasible mesh Mf and a corresponding cut layout Xf is provided as an additional output in said step c). This additional output can be used as an input for a following iteration. The manipulated mesh Mm can be determined as feasible based upon a comparison of the calculated maximum strain of the patches during the extraction movement with the threshold, wherein the mesh is determined as being feasible if none of the maximum strains of all its patches exceeds the threshold.

The manipulated mesh Mm of step d) comprises at least one additional cut. Therefore, it is possible to decrease the maximum strain of a patch during the extraction movement. Adding additional cuts could prove particularly useful in case the initial mesh is not feasible, wherein the additional cuts are chosen in order to create a feasible manipulated mesh Mf. By alternative, the manipulated mesh Mm of step d) can be a reduced mesh by merging at least two neighboring initial patches pi of the initial closed surface mesh Mi.

Therein, step a) advantageously further comprises the step
- taking as an initial input at least one parameter indicating a feasible resilience of the flexible material of the mold, said at least one parameter being used as an input at least in the simulation according to step b), and wherein at least one selected feasible mesh Mf of step c) is used as an input to be manipulated in another step d), wherein the steps b to d) are repeated for a determinable number of times yielding a selected mesh Mf having a verified optimized cut layout Xff. The verified optimized cut layout Xff is created as a result of said manipulation, optimizing the cut layout into a feasible cut layout, said feasible cut layout typically having the lowest possible number of cuts and the lowest possible cut length.

Preferably, the iterations of steps b) to d) are determined based on an optimum criterion, said optimum criterion defining that for a given mesh in step c) all the potential meshes Mp having one patch less are calculated, wherein the maximum strain during the extraction of each potential mesh Mp is calculated according to step b), wherein a feasible potential mesh Mp with the lowest maximum strain is chosen as the mesh for the next iteration of steps b) to d), wherein the iterations are at latest aborted once no further feasible potential meshes are determined. This results in an output of a number of feasible cut layouts, in particular an optimal cut layout Xff, said optimal cut layout Xff being selected from the number of feasible cut layouts, wherein the optimal cut layout Xff has the lowest cut length and/or the lowest number of patches of all the feasible cut layouts Xf. In order to speed up the calculations the simulation of step b) can be aborted for each Mp in case the maximum strain exceed the lowest value of the calculated maximum strains by a certain level, for instance 30%.

According to the invention, the method further comprises an additional step e), namely
e) producing a re-usable flexible mold having cuts corresponding to a verified feasible cut layout Xf, in particular the optimized cut layout Xff, according to a previous step c).

By virtue of this features multiple reproductions of an object having rich surface details can be produced based on one re-usable flexible mold. The term "rich surface details" should not be considered as restrictive but simply expresses that the method according to the invention can be even applied to reproduce complex objects like for instance sculptures of dragons, other mythical! fantasy creatures or another object, having rich surface details.

Advantageously, the flexible mold is produced by 3D-printing. The cuts can be finished manually. For instance, a 3D-printer can provide a groove between neighboring patches, in particular a rill, which is cut open manually.

Preferably, the mold has wall thickness between 1 to 5 mm, more preferably between 2 to 3 mm.

Moreover, the mold can comprise holes within the wall, said holes being configured to allow the release of air trapped within the inside mold to the outside of the mold when the mold is filled with liquid filling material during the casting procedure.

Preferably, protrusions, or other physical connection machinery, can be provided on the outer side of the mold on both sides of cuts corresponding to the verified cut layout Xf, in particular to a verified optimized cut layout Xff, said protrusions being configured to be connected to each other by connection means, in particular by rubber bands, in order to close the mold while being filled with filling material.

Advantageously, the cuts can be sealed after closing the mold and before inserting the filling material, preferably by applying silicone or other sealant material on the cuts.

Moreover, the mold can comprise at least one opening that is arranged to enable to completely fill the mold with filling material.

Also, the mold can be placed on a supporting structure (see for instance Figures 16 and 18 of the attached document "FlexMolds: Automatic Design of Flexible Shells for Molding") of a custom printed fixture while being filled with filling material, said supporting area having a complementary shape of a corresponding area of the mold to keep mold in an optimal orientation for inserting the filling material. The supporting structure stabilizes the flexible mold and prevents deformation of the mold when being filled with filling material. Moreover, putting the mold on the supporting structure when filling the mold with filling material enables to select a position that is optimal for the release of air trapped within the mold and to guarantee a complete filling of the mold with the casting liquid.

Another aspect of the invention relates to a flexible mold designed by the method according to the invention.

Generally speaking, a detailed exemplary non-restrictive embodiment of the method is disclosed in the attached document "FlexMolds: Automatic Design of Flexible Shells for Molding", said document haven't been published yet.

### Brief description of the drawings

In the following, in order to further demonstrate the present invention, illustrative and non-restrictive embodiments are discussed, as shown in the drawings, which show:

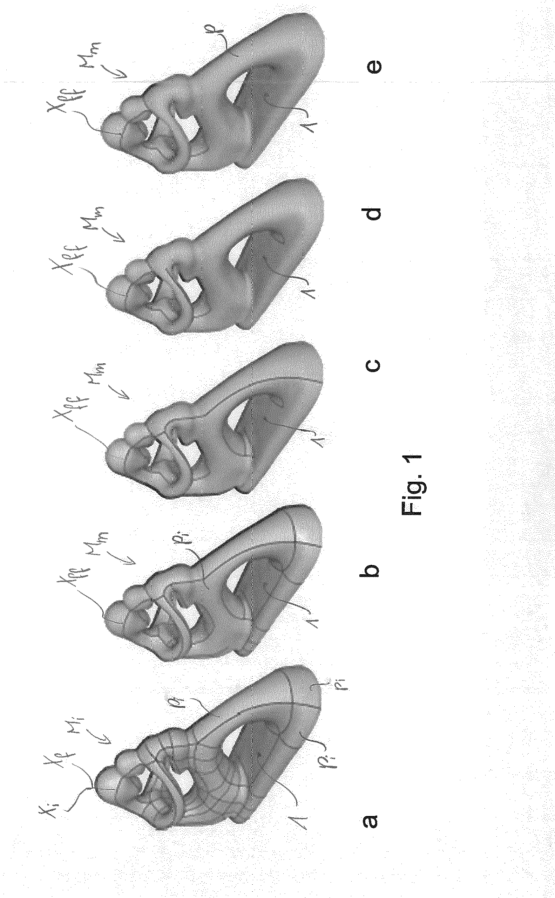

Fig. 1a to Fig. 1e exemplary embodiments of molds having certain cut layouts.

### Detailed description of embodiments of the invention

In the following, identical reference signs used in the figures depict identical features if not stated otherwise.

Fig. 1a shows an exemplary embodiment of a mold to reproduce a corresponding object! sculpture 1. Therein, the mold is fillable with filling material and typically comprises at least one opening to do so, said opening is not depicted in the Figures 1a to 1e. The object/ sculpture 1 according to Fig. 1a is similar to the object! sculpture according to the disclosure of Figures 1b to 1e. However, the object 1 is represented by a digital representation/model, said representation comprising an initial closed surface mesh Mi, said mesh Mi being aligned with the surface of the object 1 to be reproduced and being partitioned into a set P comprising a plurality of initial patches pi, whose boundaries provide a feasible initial cut layout Xi. For the sake of easier reference only three patches pi are referenced in Fig. 1a, however, in fact each patch can be referred to as a patch pi, forming a set P of patches.

Each patch pi is separated from a neighboring patch pi by lines, said lines representing cut lines, wherein the set of cut lines forms mesh Mi representing a cut layout Xi. Each line represents a cut within the mold, wherein the cuts allow to extract patches pi of the mold from the object 1 without destroying the mold.

The higher the number of patches and cuts, the lower the strain on each patch during the extraction process. On the other hand, a high number of patches causes higher work load to put such a mold in place and to seal the cuts accordingly when the mold is filled with filling material. Moreover, the removal of multiple pieced molds can be difficult. On the other hand certain cuts are needed in order facilitate the extraction of the object from the mold without destroying the mold consequently allowing a re-use of the mold.

Therefore, the invention teaches a method that allows to choose a comparably low number of cuts while ensuring the extractability of the mold from the object without damaging the mold.

Fig. 1b shows the same object 1 as Fig. 1a. However, the mesh Mi has been reduced by merging a number of neighboring patches pi. According to the present invention the reduction of patches pi was enabled by the steps b) simulating the extraction process of the mold (see for instance chapter 3 of the document "FlexMolds: Automatic Design of Flexible Shells for Molding" attached), wherein the simulation comprises
- determining an extraction path of each patch pi and the forces applied therein on each patch pi (see for instance chapter 3 of the document "FlexMolds: Automatic Design of Flexible Shells for Molding" attached), and
- calculating the maximum strain for each patch pi and comparing the maximum strain with a threshold, and
c) verifying the extraction process based on step b) and providing the result of the verification as an output, wherein the threshold represents a maximum strain for a selectable material having a selectable wall thickness.

This method yields as an output information determining if the initial cut layout Xi can be extracted without being damaged and therefore can be qualified as a feasible cut layout Xf. In a following step d), the mesh Mi can be manipulated by merging neighboring initial patches pi, resulting in a manipulated mesh Mm, which can be looped back as an input into steps b) and c), wherein the extraction process of the manipulated mesh Mm is evaluated. In the present example according to Fig. 1b the manipulated mesh Mm was verified in step c) as being feasible as the maximum strain for each patch didn't exceed a given threshold, said threshold being determined based on the resilience and/or the thickness of the material of the mold. As the manipulated mesh Mm was rated feasible the corresponding cut layout Xff is feasible and optimized when compared to Xf due to the reduction of the cut length and the number of patches pi.

Fig. 1c to 1e further demonstrate the possibilities to manipulate and reduce the mesh Mm, resulting in a mesh Mm having only one single patch p according to Fig. 1e, said mesh Mm having a feasible final cut layout Xff, said cut layout Xff being optimized to the maximum extent. The extent of the optimization can be individually specified and can also depend on the number of times the mold has to be re-used. In any case, any putative manipulation leading to a non-feasible cut layout can be dismissed.

Generally speaking, a detailed exemplary non-restrictive embodiment of the method is disclosed in the attached document "FlexMolds: Automatic Design of Flexible Shells for Molding", said document haven't been published yet.

Further details with regard to possible ways to optimize the mesh and exemplary optimization strategies and criterions are disclosed in Chapter 3 of the attached document "FlexMolds: Automatic Design of Flexible Shells for Molding", in particular in chapter 3.1, especially in items 3.1.1 to 3.1.4. Moreover, further illustrations of exemplary embodiments and applications of the present inventions are disclosed within said document, in particular with regard to Figures 1 to 25 of said document.

In other words, the present invention, also referred to as "flex molds", comprises a novel computational approach to automatically design flexible re-usable molds that allow to physically fabricate complex shapes with rich surface details or complex geometric structure. In contrast to traditional molds that consist of rigid pieces and therefore pose strict limitations on the geometric shape to allow removability, flexible molds consist of a deformable material which provides much higher freedom during the removal process. However, designing such a mold can be highly challenging as we want to define cuts that guarantee that the molded object can be removed, while at the same time we want to keep the number and the length of cuts minimal. This problem can be addressed by being able to judge the necessity of cuts and placing them optimally, while anticipating complex deformation effects during the removal. It is proposed to start by taking as input a closed surface mesh. We first generate a dense trivial initial "patch" layout that is aligned with geometric features of the model. We then search for good cut layouts by iteratively merging patches using a greedy optimization strategy. To evaluate the feasibility of a cut we simulate the extraction process with a dedicated strategy to estimate extraction forces. The maximum strain during this extraction defines a quality measure for the extractability of a patch.

The thickness of the mold can considered negligible in the feasibility evaluation process in the sense that the feasibility of each piece/patch pi can be evaluated independently, expecting that, given the small thickness of the mold and the flexibility of the material, the patches do not impede/ obstruct each other.

After we have found an optimal cut layout we can cut the final mold by adding air-holes and handles that allow to easily close the mold. The designs produced by our system can be directly send to a 3D printer. For preparing the mold for casting we close the cuts with rubber bands and seal them. We place the molds on a custom printed fixture to keep them in the optimal orientation and they are ready for inserting the resin. After a few minutes of curing the object can be removed from the mold.

Of course, the invention is not limited to the examples given in this specification and may be adjusted in any manner covered by the claims known to a person skilled in the art.

## Claims

1. Method for computationally designing a re-usable flexible mold having a verified cut layout (Xf) for reproduction of objects (1), wherein the mold is fillable with filling material, in particular resin, to form the object (1) to be reproduced within the mold, wherein the mold consists of flexible material, comprising the following steps:
a) taking as an initial input a digital representation of a closed surface mesh (Mi) of the object (1) to reproduced, said initial closed surface mesh (Mi) being aligned with surface of the object (1) to be reproduced, said initial closed surface mesh (Mi) being partitioned into a set (P) comprising a plurality of initial patches (pi), whose boundaries provide an initial cut layout (Xi) for the mold, **characterized by**
b) simulating the extraction process of either the object from the mold or of the mold from the object, wherein the simulation comprises
- determining an extraction path of each patch (pi) and forces applied therein on each patch (pi), and
- calculating the maximum strain during the extraction for each patch (pi) and comparing said maximum strain with a threshold, wherein threshold represents a maximum strain for a selectable material having a selectable wall thickness and
c) verifying an extraction process based on step b) by ensuring for each patch that the maximum strain during the extraction does not exceed the threshold and providing the result of the verification as an output,
wherein based on the result of step c)
the initial closed surface mesh (Mi) is manipulated in a following step d) resulting in a manipulated mesh (Mm), wherein the extraction process for the manipulated mesh (Mm) is calculated in another step b) and verified in another step c), wherein in case the manipulated mesh (Mm) is determined as being a feasible mesh (Mf) the feasible mesh (Mf) and a corresponding cut layout (Xf) is provided as an additional output in said step c), wherein a feasible mesh is a mesh wherein the maximum strain during the extraction process according to step b) for each patch of a given cut layout is below the threshold, and wherein
- the manipulated mesh (Mm) of step d) comprises at least one additional cut or
- the manipulated mesh (Mm) of step d) is a reduced mesh by merging at least two neighboring initial patches (pi) of the initial closed surface mesh (Mi),
and
wherein the method comprises an additional step e) producing a re-usable flexible mold having cuts corresponding to a verified feasible cut layout (Xf) according to a previous step c).

2. Method according to claim 1, wherein the manipulated mesh (Mm) of step d) is a reduced mesh by merging at least two neighboring initial patches (pi) of the initial closed surface mesh and
step a) further comprises - taking as an initial input at least one parameter indicating a feasible resilience of the flexible material of the mold, said at least one parameter being used as an input at least in the simulation according to step b), and wherein
at least one selected feasible mesh (Mf) of step c) is used as an input to be manipulated in another step d),
wherein the steps b to d) are repeated for a determinable number of times yielding a selected mesh (Mf) having a verified optimized cut layout (Xff).

3. Method of claim 2, wherein the iterations of steps b) to d) are determined based on an optimum criterion, said optimum criterion defining that for a given mesh in step c) all the potential meshes (Mp) having one patch less are calculated, wherein the maximum strain during the extraction of each potential mesh (Mp) is calculated according to step b), wherein a feasible potential mesh (Mp) with the lowest maximum strain is chosen as the mesh for the next iteration of steps b) to d), wherein the iterations are at latest aborted once no further feasible potential meshes are determined.

4. Method of any of the preceding claims, wherein the flexible mold is produced by 3D-printing.

5. Method of any of the preceding claims , wherein the mold has wall thickness between 1 to 5 mm, preferably between 2 to 3 mm.

6. Method of any of the preceding claims, wherein the mold comprises holes within its wall, said holes being configured to allow to release air trapped within the inside of the mold to the outside of the mold when the mold is filled with filling material.

7. Method of any of the preceding claims, wherein protrusions are provided on an outer side of the mold on both sides of cuts corresponding to the verified cut layout (Xf), said protrusions being configured to be connected to each other by connection means, in particular by rubber bands, in order to close the mold while being filled with filling material.

8. Method of claim 7, wherein the cuts are sealed after closing the mold and before inserting the filling material, preferably by applying silicone on the cuts.

9. Method of any of the preceding claims, wherein the mold has at least one opening that is arranged to enable to completely fill the mold with filling material.

10. Method of any of the preceding claims, wherein the mold is placed on a supporting structure of a custom printed fixture while being filled with filling material, said supporting structure having a complementary shape of a corresponding area of the mold to keep mold in an optimal orientation for inserting the filling material.

## Patentansprüche

1. Verfahren zum rechnerischen Entwerfen einer wiederverwendbaren flexiblen Form mit einem verifizierten Schnittlayout (Xf) zur Reproduktion von Objekten (1), wobei die Form mit Füllmaterial, insbesondere Harz, befüllbar ist, um das zu reproduzierende Objekt (1) innerhalb der Form zu formen, wobei die Form aus flexiblem Material besteht, umfassend die folgenden Schritte:
a) Nehmen einer digitalen Darstellung eines geschlossenen Oberflächennetzes (Mi) des zu reproduzierenden Objekts (1) als eine anfängliche Eingabe, wobei das anfängliche geschlossene Oberflächennetz (Mi) mit der Oberfläche des zu reproduzierenden Objekts (1) ausgerichtet ist, wobei das anfängliche geschlossene Oberflächennetz (Mi) in einen Satz (P) aufgeteilt ist, der eine Vielzahl von anfänglichen Patches (pi) umfasst, deren Grenzen ein anfängliches Schnittlayout (Xi) für die Form bereitstellen, **gekennzeichnet durch**
b) Simulieren des Extraktionsprozesses entweder des Objekts aus der Form oder der Form aus dem Objekt, wobei die Simulation umfasst
- Bestimmen eines Extraktionsweges jedes Flecks (pi) und der darin auf jeden Fleck (pi) ausgeübten Kräfte, und
- Berechnen der maximalen Dehnung während der Extraktion für jeden Patch (pi) und Vergleichen der maximalen Dehnung mit einem Schwellenwert, wobei der Schwellenwert eine maximale Dehnung für ein auswählbares Material mit einer auswählbaren Wandstärke darstellt, und
c) Verifizieren eines auf Schritt b) basierenden Extraktionsprozesses, indem für jeden Patch sichergestellt wird, dass die maximale Dehnung während der Extraktion den Schwellenwert nicht überschreitet, und Bereitstellen des Ergebnisses der Verifizierung als eine Ausgabe,
wobei basierend auf dem Ergebnis von Schritt c)
das anfängliche geschlossene Oberflächennetz (Mi) in einem folgenden Schritt d) manipuliert wird, was zu einem manipulierten Netz (Mm) führt, wobei der Extraktionsprozess für das manipulierte Netz (Mm) in einem weiteren Schritt b) berechnet und in einem weiteren Schritt c) verifiziert wird, wobei für den Fall, dass das manipulierte Mesh (Mm) als ein machbares Mesh (Mf) bestimmt wird, das machbare Mesh (Mf) und ein entsprechendes Schnittlayout (Xf) als eine zusätzliche Ausgabe in dem Schritt c) bereitgestellt wird, wobei ein machbares Mesh ein Mesh ist, bei dem die maximale Dehnung während des Extraktionsprozesses gemäß Schritt b) für jeden Patch eines gegebenen Schnittlayouts unter dem Schwellenwert liegt, und wobei
- die manipulierte Masche (Mm) von Schritt d) mindestens einen zusätzlichen Schnitt umfasst oder
- das manipulierte Netz (Mm) von Schritt d) ein reduziertes Netz ist, indem mindestens zwei benachbarte anfängliche Flecken (pi) des anfänglichen geschlossenen Oberflächennetzes (Mi) zusammengeführt werden, und wobei das Verfahren einen zusätzlichen Schritt umfasst
e) Herstellen einer wiederverwendbaren flexiblen Form mit Schnitten, die einem verifizierten durchführbaren Schnittlayout (Xf) gemäß einem vorherigen Schritt c) entsprechen.

2. Verfahren nach Anspruch 1, wobei das manipulierte Netz (Mm) von Schritt d) ein reduziertes Netz ist, indem mindestens zwei benachbarte anfängliche Flecken (pi) des anfänglichen geschlossenen Oberflächennetzes zusammengeführt werden, und
Schritt a) ferner umfasst: - Nehmen als eine anfängliche Eingabe mindestens eines Parameters, der eine machbare Elastizität des flexiblen Materials der Form angibt, wobei der mindestens eine Parameter als eine Eingabe zumindest in der Simulation gemäß Schritt b) verwendet wird, und wobei
mindestens ein ausgewähltes realisierbares Netz (Mf) aus Schritt c) als eine in einem weiteren Schritt d) zu manipulierende Eingabe verwendet wird,
wobei die Schritte b) bis d) für eine bestimmbare Anzahl von Malen wiederholt werden, was ein ausgewähltes Netz (Mf) mit einem verifizierten optimierten Schnittlayout (Xff) ergibt.

3. Verfahren nach Anspruch 2, wobei die Iterationen der Schritte b) bis d) auf der Grundlage eines Optimalitätskriteriums bestimmt werden, wobei das Optimalitätskriterium definiert, dass für eine gegebene Masche in Schritt c) alle potenziellen Maschen (Mp) mit einem Patch weniger berechnet werden, wobei die maximale Dehnung während der Extraktion jeder potentiellen Masche (Mp) gemäß Schritt b) berechnet wird, wobei eine durchführbare potentielle Masche (Mp) mit der geringsten maximalen Dehnung als die Masche für die nächste Iteration der Schritte b) bis d) gewählt wird, wobei die Iterationen spätestens dann abgebrochen werden, wenn keine weiteren durchführbaren potentiellen Maschen ermittelt werden.

4. Verfahren nach einem der vorhergehenden Ansprüche, wobei die flexible Form im 3D-Druckverfahren hergestellt wird.

5. Verfahren nach einem der vorhergehenden Ansprüche, wobei die Form eine Wandstärke zwischen 1 bis 5 mm, vorzugsweise zwischen 2 bis 3 mm, aufweist.

6. Verfahren nach einem der vorhergehenden Ansprüche, wobei die Form Löcher in ihrer Wand aufweist, die so konfiguriert sind, dass sie es ermöglichen, im Inneren der Form eingeschlossene Luft nach außen zu entlassen, wenn die Form mit Füllmaterial gefüllt wird.

7. Verfahren nach einem der vorhergehenden Ansprüche, bei dem an einer Außenseite der Form auf beiden Seiten von Schnitten, die dem überprüften Schnittlayout (Xf) entsprechen, Vorsprünge vorgesehen sind, wobei die Vorsprünge so gestaltet sind, dass sie durch Verbindungsmittel, insbesondere durch Gummibänder, miteinander verbunden werden können, um die Form zu schließen, während sie mit Füllmaterial gefüllt wird.

8. Verfahren nach Anspruch 7, wobei die Schnitte nach dem Schließen der Form und vor dem Einbringen des Füllmaterials versiegelt werden, vorzugsweise durch Auftragen von Silikon auf die Schnitte.

9. Verfahren nach einem der vorhergehenden Ansprüche, wobei die Form mindestens eine Öffnung aufweist, die so angeordnet ist, dass sie ein vollständiges Befüllen der Form mit Füllmaterial ermöglicht.

10. Verfahren nach einem der vorhergehenden Ansprüche, wobei die Form während des Befüllens mit Füllmaterial auf einer Stützstruktur einer kundenspezifisch bedruckten Vorrichtung platziert wird, wobei die Stützstruktur eine komplementäre Form eines entsprechenden Bereichs der Form aufweist, um die Form in einer optimalen Ausrichtung für das Einsetzen des Füllmaterials zu halten.

## Revendications

1. Méthode de conception informatique d'un moule souple réutilisable ayant un plan de coupe vérifié (Xf) pour la reproduction d'objets (1), dans lequel le moule peut être rempli de matériau de remplissage, en particulier de résine, pour former l'objet (1) à reproduire dans le moule, dans lequel le moule est constitué d'un matériau souple, comprenant les étapes suivantes :
a) prendre comme entrée initiale une représentation numérique d'une maille de surface fermée (Mi) de l'objet (1) à reproduire, ladite maille de surface fermée initiale (Mi) étant alignée avec la surface de l'objet (1) à reproduire, ladite maille de surface fermée initiale (Mi) étant partitionnée en un ensemble (P) comprenant une pluralité de patchs initiaux (pi), dont les limites fournissent un plan de coupe initial (Xi) pour le moule, **caractérisé par**
b) simuler le processus d'extraction de l'objet du moule ou du moule de l'objet, la simulation consistant à
- la détermination d'une trajectoire d'extraction de chaque pièce (pi) et des forces appliquées à chaque pièce (pi), et
- le calcul de la déformation maximale pendant l'extraction pour chaque pièce (pi) et la comparaison de cette déformation maximale avec un seuil, le seuil représentant une déformation maximale pour un matériau sélectionnable ayant une épaisseur de paroi sélectionnable, et
c) vérifier un processus d'extraction basé sur l'étape b) en s'assurant pour chaque pièce que la déformation maximale pendant l'extraction ne dépasse pas le seuil et en fournissant le résultat de la vérification en tant que sortie,
dans lequel, sur la base du résultat de l'étape c)
le maillage initial de la surface fermée (Mi) est manipulé dans une étape d) suivante, ce qui donne un maillage manipulé (Mm), dans lequel le processus d'extraction pour le maillage manipulé (Mm) est calculé dans une autre étape b) et vérifié dans une autre étape c), dans laquelle, si la maille manipulée (Mm) est déterminée comme étant une maille réalisable (Mf), la maille réalisable (Mf) et un plan de coupe correspondant (Xf) sont fournis en tant que sortie supplémentaire dans ladite étape c), dans laquelle une maille réalisable est une maille dans laquelle la déformation maximale au cours du processus d'extraction conformément à l'étape b) pour chaque patch d'un plan de coupe donné est inférieure au seuil, et dans laquelle
- le maillage manipulé (Mm) de l'étape d) comprend au moins une découpe supplémentaire ou
- le maillage manipulé (Mm) de l'étape d) est un maillage réduit par fusion d'au moins deux patchs initiaux voisins (pi) du maillage initial de la surface fermée (Mi), et dans lequel la méthode comprend une étape supplémentaire
e) produire un moule souple réutilisable comportant des découpes correspondant à un plan de découpe réalisable vérifié (Xf) conformément à l'étape c) précédente.

2. Méthode selon la revendication 1, dans lequel le maillage manipulé (Mm) de l'étape d) est un maillage réduit par la fusion d'au moins deux taches initiales voisines (pi) du maillage initial de la surface fermée, et
l'étape a) comprend en outre - la prise en compte initiale d'au moins un paramètre indiquant une résilience possible du matériau souple du moule, ledit au moins un paramètre étant utilisé comme donnée d'entrée au moins dans la simulation selon l'étape b), et dans laquelle
au moins une maille réalisable (Mf) sélectionnée à l'étape c) est utilisée comme entrée à manipuler dans une autre étape d),
dans laquelle les étapes b à d) sont répétées un nombre déterminable de fois, ce qui permet d'obtenir un maillage sélectionné (Mf) présentant un plan de coupe optimisé vérifié (Xff).

3. Méthode de la revendication 2, dans laquelle les itérations des étapes b) à d) sont déterminées sur la base d'un critère optimal, ledit critère optimal définissant que pour une maille donnée à l'étape c), toutes les mailles potentielles (Mp) ayant un patch en moins sont calculées, la déformation maximale pendant l'extraction de chaque maille potentielle (Mp) est calculée conformément à l'étape b), une maille potentielle réalisable (Mp) présentant la déformation maximale la plus faible est choisie comme maille pour l'itération suivante des étapes b) à d), les itérations étant interrompues au plus tard lorsqu'aucune autre maille potentielle réalisable n'est déterminée.

4. Méthode de l'une quelconque des revendications précédentes, dans laquelle le moule souple est produit par impression 3D.

5. Méthode de l'une quelconque des revendications précédentes, dans laquelle le moule a une épaisseur de paroi comprise entre 1 et 5 mm, de préférence entre 2 et 3 mm.

6. Méthode de l'une quelconque des revendications précédentes, dans lequel le moule comprend des trous à l'intérieur de sa paroi, ces trous étant configurés pour permettre de libérer l'air emprisonné à l'intérieur du moule vers l'extérieur du moule lorsque le moule est rempli de matériau de remplissage.

7. Méthode de l'une quelconque des revendications précédentes, dans laquelle des protubérances sont prévues sur un côté extérieur du moule de part et d'autre des coupes correspondant à la disposition vérifiée des coupes (Xf), lesdites protubérances étant configurées pour être reliées les unes aux autres par des moyens de connexion, en particulier par des élastiques, afin de fermer le moule pendant qu'il est rempli avec le matériau de remplissage.

8. Méthode de la revendication 7, dans laquelle les coupes sont scellées après la fermeture du moule et avant l'insertion du matériau de remplissage, de préférence en appliquant du silicone sur les coupes.

9. Méthode de l'une quelconque des revendications précédentes, dans laquelle le moule comporte au moins une ouverture qui est disposée de manière à permettre le remplissage complet du moule avec le matériau de remplissage.

10. Méthode de l'une quelconque des revendications précédentes, dans laquelle le moule est placé sur une structure de support d'un dispositif imprimé sur mesure pendant qu'il est rempli de matériau de remplissage, ladite structure de support ayant une forme complémentaire d'une zone correspondante du moule afin de maintenir le moule dans une orientation optimale pour l'insertion du matériau de remplissage.
